# FASCICULE DE BREVET EUROPEEN

(11) **EP 3 069 941 B1**
(45) Date de publication et mention de la délivrance du brevet: **13.03.2019**
(21) Numéro de dépôt: 16157010.6
(22) Date de dépôt: 23.02.2016
(51) Int. Cl.: B60S 1/38, B60S 1/40

(54) **DISPOSITIF DE CONNEXION ENTRE UN BALAI D'ESSUYAGE ET UN ADAPTATEUR D'UN BRAS**
VERBINDUNGSVORRICHTUNG ZWISCHEN EINEM SCHEIBENWISCHER UND EINEM ADAPTER EINES WISCHERARMS
CONNECTION DEVICE BETWEEN A WINDSCREEN WIPER AND AN ADAPTER OF AN ARM

(30) Priorité: 19.03.2015 FR 1552276
(43) Date de publication de la demande: 21.09.2016
(73) Titulaire: Valeo Systèmes d'Essuyage, 78322 Le Mesnil Saint Denis (FR)
(72) Inventeur: GARIBALDI, Vincent, 63500 ISSOIRE (FR); KUCHLY, Nicolas, 63500 ISSOIRE (FR)
(74) Mandataire: Callu-Danseux, Violaine

(56) Documents cités:
- EP-A1- 2 692 598
- WO-A1-2013/186503
- DE-A1-102012 224 474

## Description

Le domaine de la présente invention est celui des équipements pour les véhicules, et plus particulièrement celui des équipements pour l'essuyage des vitres d'un véhicule. La présente invention vise un dispositif de connexion participant à une liaison mécanique entre un bras d'essuyage et un balai d'essuyage apte à essuyer un pare-brise ou une vitre arrière du véhicule.

Les véhicules automobiles sont couramment équipés de système d'essuie-glace pour assurer un balayage et un lavage du pare-brise et éviter que la vision qu'a le conducteur de son environnement ne soit perturbée. Ces essuie-glaces sont classiquement entraînés par un bras effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, de palonniers articulés qui tiennent la lame racleuse en plusieurs endroits discrets, soit, dans une version plus récente dénommée "flat blade" (pour "lame plate"), d'un ensemble semi-rigide qui maintient la lame racleuse sur toute sa longueur. Dans cette seconde solution, le balai est rattaché au bras tournant de l'essuie-glace par un ensemble constitué d'un connecteur mécanique et d'un adaptateur. Le connecteur mécanique est une pièce qui est sertie directement sur le balai plat, alors que l'adaptateur est une pièce intermédiaire qui permet la fixation du connecteur sur le bras de l'essuie-glace. Ces deux pièces sont reliées l'une à l'autre par un axe transversal qui autorise leur rotation relative, dans un plan perpendiculaire au pare-brise passant par le bras.

Le dispositif d'essuyage décrit ci-dessus est couramment combiné à un système de projection d'un liquide sur le pare-brise. Un tel système de projection prend par exemple la forme de buses installées sur le capot du véhicule. Un inconvénient de ce type de système réside dans le fait qu'il est nécessaire de ménager des trous dans le capot. Un autre désavantage inhérent à cette solution technique réside dans la distance qui sépare la buse de la surface du pare-brise qu'il convient de recouvrir de liquide. L'écoulement de l'air sur le capot et sur le pare-brise quand le véhicule est en mouvement perturbe la projection de liquide.

Une technologie alternative est apparue connue sous le terme anglais « Aquablade ». Selon cette technologie, le balai d'essuyage comprend une rampe de projection du liquide de lavage sur le pare-brise. Une telle rampe est formée par un conduit qui s'étend le long du balai d'essuyage selon un axe longitudinal principal d'extension de ce balai. Ce conduit est pourvu d'orifices de projection répartis le long de cet axe. Cette technologie est particulièrement efficace mais présente un inconvénient représenté par son coût.

Le document WO 2013/186503 A1 montre un dispositif de connexion apte à relier un balai d'essuyage d'une vitre d'un véhicule à un bras d'essuyage selon le préambule de la première revendication.

Le but de la présente invention est donc de résoudre les inconvénients décrits ci-dessus en concevant un système de projection de liquide qui ne souffre pas ou peu des perturbations aérauliques et qui présente un coût aussi faible que possible, tout en assurant au mieux la fonction de projection du liquide sur le pare-brise.

L'invention a donc pour objet un dispositif de connexion, autrement appelé connecteur de liaison, apte à relier un balai d'essuyage d'une vitre d'un véhicule à un bras d'essuyage, comprenant un moyen de solidarisation au balai d'essuyage surmonté d'un moyen de liaison à un adaptateur relié au bras d'essuyage, innovant en ce qu'il comprend une plateforme issue du moyen de solidarisation et un composant qui prend naissance sur la plateforme, dans lequel le moyen de solidarisation, le moyen de liaison et la plate-forme sont monobloc et et dans lequel le composant, la plateforme et le moyen de liaison délimitent au moins partiellement un logement apte à recevoir au moins une partie de l'adaptateur.

Selon un exemple de réalisation, un orifice de projection d'un liquide est formé sur le composant. Dans une telle situation, le composant devient un composant de projection de liquide. Il est fait mention ici et ci-dessous d'un orifice de projection, une telle expression couvrant le cas d'un unique orifice ou le cas d'une pluralité d'orifice. Ainsi, quand les mots « orifice de projection » sont utilisés ci-dessous au singulier, on comprend qu'il peut s'agir de plusieurs orifices de projection. De même, quand les mots « orifice de projection » sont utilisés au pluriel, on comprend qu'il peut s'agir d'un unique orifice de projection.

Selon un autre exemple de réalisation, au moins un conduit est formé dans le composant pour transporter le liquide depuis une entrée de liquide vers ledit orifice.

Avantageusement, le moyen de liaison comprend un moyen de pivotement apte à mettre en rotation autour d'un axe le moyen de liaison par rapport à l'adaptateur. Dans une telle situation, l'orifice de projection est ménagé au niveau l'axe, par exemple à +/- 2 mm de l'axe, ou au-delà de celui-ci, en s'éloignant de la plateforme.

Selon une variante de l'invention, le composant est délimité par une paroi intérieure tournée vers le logement, une paroi extérieure, au moins deux parois latérales joignant la paroi intérieure à la paroi extérieure et une paroi distale opposée à la plateforme, l'orifice de projection étant ménagé exclusivement dans la paroi extérieure et/ou dans la ou les parois latérales.

On notera qu'une canule d'alimentation est formée sur l'une des parois latérales délimitant le composant. Cette canule d'alimentation délimite l'entrée de liquide évoquée ci-dessus.

Le moyen de liaison s'étend selon une direction perpendiculaire à un plan d'essuyage du balai d'essuyage, le composant s'étendant selon une deuxième direction. Un angle est alors formé entre la première direction et la deuxième direction et cet angle est compris entre 15° et 55°.

Selon un mode de réalisation, le moyen de solidarisation comprend au moins deux crochets aptes à enchâsser au moins en partie une structure constitutive du balai d'essuyage. Chacun des crochets peut alors prendre la forme d'un « U », une première face du « U » étant apte à être en contact avec une face supérieure de la structure du balai d'essuyage, une seconde face du « U » étant apte à être en contact avec une face inférieure de la structure du balai d'essuyage et une troisième face relie la première face à la deuxième face.

Selon l'invention le moyen de solidarisation, le moyen de liaison et la plateforme sont monobloc, c'est-à-dire moulés simultanément à partir d'un même matériau polymère.

Selon un exemple de mise en oeuvre, le composant et la plateforme sont monobloc. On comprend ici que le composant et la plateforme forme un ensemble unitaire, par exemple issu d'un même moulage à partir d'un même matériau polymère, éventuellement conjointement avec le moyen de solidarisation et le moyen de liaison.

De manière alternative, le composant et la plateforme comprennent des moyens de fixation agencés pour assembler le composant sur la plateforme. Ces moyens de fixation sont par exemple mis en oeuvre par des formes complémentaires ménagées respectivement sur le composant et sur la plateforme.

On notera que les moyens de fixation sont à coulissement. Un procédé d'assemblage du composant sur la plateforme où le composant est translaté longitudinalement sur la plateforme est ici prévu.

De manière alternative, les moyens de fixation sont à clippage. Un procédé d'assemblage du composant sur la plateforme où le composant est tourné autour d'un axe longitudinale de la plateforme est envisagé ici.

L'invention vise également un balai d'essuyage comprenant une lame apte à être appliquée contre une vitre d'un véhicule, une structure flexible reliée à la lame et un dispositif de connexion comprenant au moins l'une quelconque des caractéristiques présentées ci-dessus, un tel dispositif de connexion étant solidarisé à la structure flexible au centre de celle-ci, notamment sensiblement au centre de celle-ci, selon une direction longitudinale de la structure flexible.

Un tel balai peut comprendre un adaptateur lié en rotation avec le dispositif de connexion, l'adaptateur s'étend au moins en partie dans le logement.

L'invention couvre encore un système d'essuyage d'une vitre d'un véhicule comprenant un balai d'essuyage tel qu'évoqué ci-dessus et un bras d'essuyage, dans lequel une partie du bras d'essuyage s'étend dans le logement.

En employant une pièce présente sur le balai d'essuyage pour mettre en oeuvre la projection de liquide, on garantit une proximité qui limite les perturbations consécutives à l'écoulement de l'air. L'invention est également économiquement avantageuse puisque la fonction de projection de liquide est regroupée sur le dispositif de connexion utilisé pour relier le balai d'essuyage au bras d'entraînement.

Les avantages de la conformation du dispositif de connexion selon l'invention résident en premier lieu dans une protection de la liaison entre l'adaptateur et le dispositif de connexion contre les agressions et impuretés extérieures.

Quand le composant est un composant de projection de liquide car il comporte au moins un orifice de projection, un avantage réside dans la possibilité de localiser l'orifice de manière éloignée de la vitre. Ceci permet d'ouvrir les angles de projection et ainsi de couvrir en liquide toute la surface de la vitre balayée par le balai d'essuyage au moyen d'un unique composant de projection relié au dispositif de connexion.

D'autres caractéristiques, détails et avantages de l'invention ressortiront plus clairement à la lecture de la description donnée ci-après à titre indicatif en relation avec des dessins dans lesquels :
- la figure 1 est une vue générale, en perspective, d'un balai d'essuyage selon l'invention,
- la figure 2 est une vue en perspective d'une extrémité du bras d'essuyage, sur laquelle est monté le dispositif de connexion selon l'invention,
- la figure 3 est une vue en perspective du dispositif de connexion, son adaptateur et l'extrémité du bras d'essuyage selon l'invention,
- la figure 4 est une vue de côté, en perspective, du dispositif de connexion utilisé aux figures 2 et 3,
- la figure 5 est une vue d'un autre côté, en perspective, du dispositif de connexion selon la figure 4,
- la figure 6 est une vue de détails, en perspective, d'un premier mode de réalisation du dispositif de connexion selon l'invention,
- la figure 7 est une vue de détails, en perspective, d'un deuxième mode de réalisation du dispositif de connexion selon l'invention.

Il faut tout d'abord noter que les figures exposent l'invention de manière détaillée pour mettre en oeuvre l'invention, lesdites figures pouvant bien entendu servir à mieux définir l'invention le cas échéant.

Dans la suite de la description, les dénominations longitudinales ou latérales, dessus, dessous, devant, derrière se réfèrent à l'orientation du balai d'essuyage ou du dispositif de connexion selon l'invention. La direction longitudinale correspond à l'axe principal du balai d'essuyage dans lequel il s'étend, alors que les orientations latérales correspondent à des droites concourantes, c'est-à-dire qui croisent la direction longitudinale, notamment perpendiculaires à l'axe longitudinal du balai d'essuyage dans son plan de rotation. Pour les directions longitudinales, les dénominations extérieure ou intérieure s'apprécient par rapport au point de fixation du balai d'essuyage sur le bras d'essuyage, la dénomination intérieure correspondant à la partie où le bras et un demi-balai s'étendent. Enfin, les directions référencées comme supérieures ou inférieures correspondent à des orientations perpendiculaires au plan de rotation du balai d'essuyage, la dénomination inférieure contenant le plan du pare-brise.

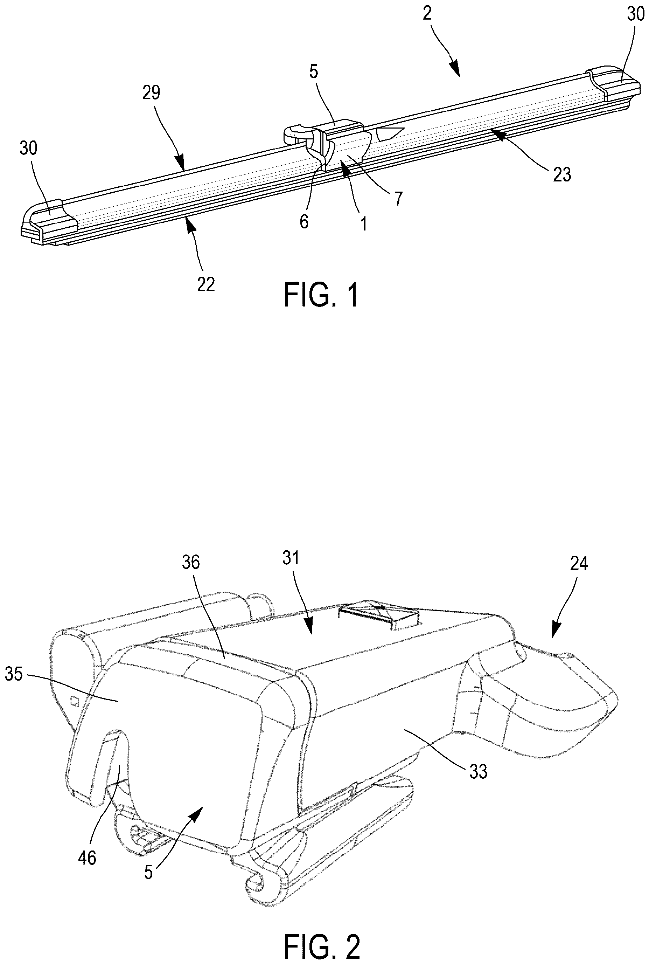

En se référant tout d'abord à la figure 1, on voit un balai d'essuyage 2 selon l'invention. Un tel balai d'essuyage 2 est utilisé pour racler une vitre d'un véhicule et déplacer hors du champ de vision d'un conducteur l'eau déposée sur cette vitre. Le balai d'essuyage 2 est constitué d'un dispositif de connexion 1 selon l'invention, coiffé par un adaptateur 5 et dont la fonction est d'interfacer un même dispositif de connexion 1 avec plusieurs types de bras d'essuyage. Le balai d'essuyage 2 comprend également au moins un support flexible 23, un ou plusieurs déflecteurs d'air 29, une lame de frottement 22 et au moins un, voire deux, embouts d'extrémité 30 installés sur chaque partie terminale du support flexible 23.

Le support flexible 23 peut prendre la forme d'une unique bande métallique plate et élastique. Selon une alternative, le support flexible 23 peut être formé par deux bandes métalliques et élastiques logées chacune dans une rainure ménagée de part et d'autre de la lame 22. Dans les deux cas ci-dessus, à l'état de repos, une telle bande métallique est reconnaissable en ce qu'elle est courbée selon un plan perpendiculaire à une direction longitudinale de la bande. La fonction d'une telle bande métallique, qu'elle soit unique ou double, est de répartir les efforts d'appui le long de la lame 22 générés par le moyen de connexion 1 attaché au support flexible 23 au centre, longitudinalement, du balai d'essuyage 2.

La figure 2 montre une extrémité 31 du bras d'essuyage 24. Cette extrémité 31 présente une section en forme de « U » avec un dos 32 et deux bras 33 et 25 issus du dos 32.

A l'intérieur d'un volume délimité par le dos 32 et les deux bras 33 et 25, est logé au moins en partie l'adaptateur 5. Plus particulièrement, cet adaptateur 5 comprend un corps reçu dans le volume intérieur et à l'extrémité duquel se trouve une tête 35. Cette tête ferme une partie extrémale de l'adaptateur 5 et présente une paroi 36 alignée sur le profil en U de l'extrémité 31. Une fente 46 est réalisée dans la tête 35 de l'adaptateur 5 en vue d'éviter toutes interférences mécaniques avec le déflecteur d'air situé à l'extérieur du balai d'essuyage 2.

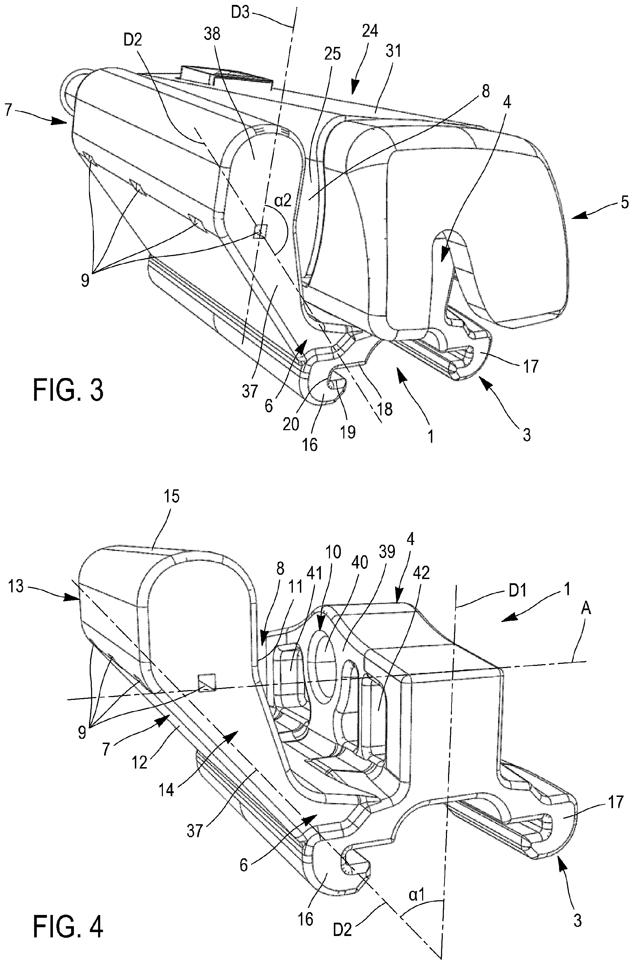

La figure 3 illustre plus en détails un exemple de la structure du dispositif de connexion 1 selon l'invention, équipé de l'adaptateur 5 et de l'extrémité 31 du bras 24. Le dispositif de connexion 1 comprend un moyen de solidarisation 3 au balai d'essuyage surmonté d'un moyen de liaison 4 à l'adaptateur, ce dernier étant relié au bras d'essuyage 24 par l'intermédiaire de l'adaptateur 5.

Le moyen de solidarisation 3 a pour fonction d'agripper et de fixer le dispositif de connexion 1 sur une zone structurelle du balai d'essuyage, une telle zone étant formée sensiblement au centre, selon l'axe longitudinale du balai, du support flexible constitutif du balai. A titre d'exemple, le moyen de solidarisation 3 prend la forme de crochets référencés 16 et 17 agencés pour enchâsser un bord de la structure flexible. Pour ce faire, chaque crochet 16 ou 17 comprend une section en forme de « U », dans laquelle une première face 18 du « U » vient en contact avec une face supérieure de la structure flexible du balai d'essuyage, une seconde face 19 du « U » vient aussi en contact (au jeu de montage près) avec une face inférieure de la structure flexible du balai d'essuyage. Entre ces deux faces, on trouve une troisième face 20 qui s'étend dans un plan globalement parallèle à un plan d'extension d'une tranche de la structure flexible du balai d'essuyage.

Le moyen de solidarisation 3 peut également comprendre un dispositif de blocage qui limite toute translation longitudinale du dispositif de connexion 1 vis-à-vis de la structure flexible.

Au-dessus de ce moyen de solidarisation 3, est prévu le moyen de liaison 4 avec l'adaptateur 5. Il s'agit d'une liaison mécanique avec un degré de liberté autorisant une rotation entre l'adaptateur 5 et le dispositif de connexion 1. La fonction du moyen de liaison 4 est d'assurer un lien en rotation avec l'adaptateur 5, cette rotation permettant au balai d'essuyage de suivre la courbure du pare-brise qu'il essuie.

Selon l'invention, le dispositif de connexion 1 comprend une plateforme 6 issue du moyen de solidarisation 3, autrement appelée socle. On comprend ici que la plateforme 6 prend naissance sur le moyen de solidarisation 3, notamment au-dessus d'un des deux crochets 16. Une telle plateforme 6 s'étend longitudinalement le long du moyen de solidarisation 3, notamment de manière parallèle à celui-ci. Cette plateforme 6 forme ainsi une interface entre le moyen de solidarisation 3 et un composant 7 qui s'étend sensiblement verticalement, selon une même direction que la direction dans laquelle s'étend le moyen de liaison 4.

Ce composant 7 forme une prolongation de la plateforme 6 en s'évasant dans une direction transversale à la direction longitudinale du dispositif de connexion 1. Le composant 7 comprend ainsi une première portion 37 qui s'étend selon un plan longitudinal de direction D2. Cette première portion est par exemple évasée, et elle est suivie d'une seconde portion 38 de forme non évasée qui s'étend selon un plan longitudinal d'axe D3. L'axe D2 et l'axe D3 sont concourants et non parallèles et forment un angle a2 compris entre 120° et 179°, de telle sorte que la direction de l'axe D3 soit parallèle à une direction d'extension du moyen de liaison 4 perpendiculaire au plan de balayage du balai d'essuyage.

Au moins un orifice de projection 9 de liquide pour laver la vitre est ménagé dans le composant 7. Selon le mode de réalisation illustré sur la figure 3, l'orifice 9 est ménagé à la frontière entre la première portion 37 et la deuxième portion 38 définissant le composant 7. Dans le cas des figures 3 et 4, le composant 7 comprend cinq orifices de projection 9 dont trois sont débouchant dans une même face, ci-après appelée face extérieure 12, et deux sont débouchant chacun dans une face concourante, appelée face latérale 13 et 14.

La figure 4 montre le dispositif de connexion 1 seul. Le composant 7, la plateforme 6 et le moyen de liaison 4 délimitent au moins partiellement un logement 8 apte à recevoir au moins une partie de l'adaptateur 5, visible sur la figure 3. Ce logement 8 est également adapté pour recevoir le bras 25 de l'extrémité du bras, le bras formant ainsi un exemple d'une partie du bras qui s'étend dans le logement 8.

Ce logement 8 est un espace longitudinal ouvert vers le dessus et à chacune des extrémités longitudinales du dispositif de connexion 1. Ce logement 8 est ainsi bordé au moins par la plateforme 6, le composant 7, plus particulièrement sa paroi intérieure 11, et le moyen de liaison 4 qui surplombe le moyen de solidarisation 3, par le biais d'une face 39.

Le composant 7 est délimité par une paroi intérieure 11, c'est-à-dire tournée vers le logement 8 et faisant face au moins en partie au moyen de liaison 4. Le composant 7 est encore délimité par une paroi 12 dite extérieure, en ce sens qu'elle fait face au milieu entourant le dispositif de connexion 1. La paroi intérieure 11 et la paroi extérieure 12 sont jointes l'une à l'autre par au moins deux parois latérales 13, 14. La première portion 37 et la deuxième portion 38 évoquées plus haut forment l'une des parois latérales 13 ou 14. Le composant 7 est enfin délimité par une paroi 15 dite distale, en ce sens qu'elle forme l'extrémité libre du composant 7. Elle est ainsi opposée à la plateforme 6.

Selon cet exemple de réalisation, le ou les orifices 9 de projection sont ménagés exclusivement dans la paroi extérieure 12 et dans l'une des deux parois latérales, ici référencée 14.

Le moyen de liaison 4 comprend un moyen de pivotement 10. Selon un exemple de réalisation, le moyen de pivotement prend la forme d'un trou 40 traversant transversalement le moyen de liaison 40. Un tel trou 40 forme un palier qui réceptionne soit un arbre de rotation indépendant ou des torons ménagés dans l'adaptateur 5. Alternativement, le moyen de pivotement 10 peut être formé par deux arbres cylindriques formés à la place du trou et débouchant de part et d'autre des faces délimitant le moyen de liaison 4. Quelle que soit la solution retenue, ce moyen de pivotement a pour fonction de générer une rotation autour d'un axe A entre le moyen de liaison 4 et l'adaptateur 5, l'axe A passant par le moyen de pivotement 10.

Selon un exemple de réalisation non limitatif, l'orifice 9 de projection est ménagé au moins au niveau de l'axe A ou au-delà de celui-ci, en s'éloignant de la plateforme 6. L'orifice 9 de projection peut ainsi être placé entre un plan longitudinal passant par l'axe A et la paroi distale 15 du composant 7.

De manière intéressante, l'invention prévoit que la direction D1 passant par le moyen de liaison 4 forme un angle a1 compris entre 15° et 55° avec la droite D2 définissant la direction générale d'extension du composant 7. Plus particulièrement, la direction D2 illustre la direction d'extension de la première portion 37 du composant 7. Une telle disposition angulaire des directions D1 et D2 est valable longitudinalement le long du dispositif de connexion 1. Autrement dit, le moyen de liaison 4 s'étend dans un plan passant par la direction D1 alors que le composant 7 s'étend dans un plan passant par la direction D2, l'angle a1 compris entre 15° et 55° étant formé entre ces deux plans.

On notera encore que le moyen de liaison comprend au moins deux cavités 41 et 42 ménagées de part et d'autre du moyen de pivotement 10.

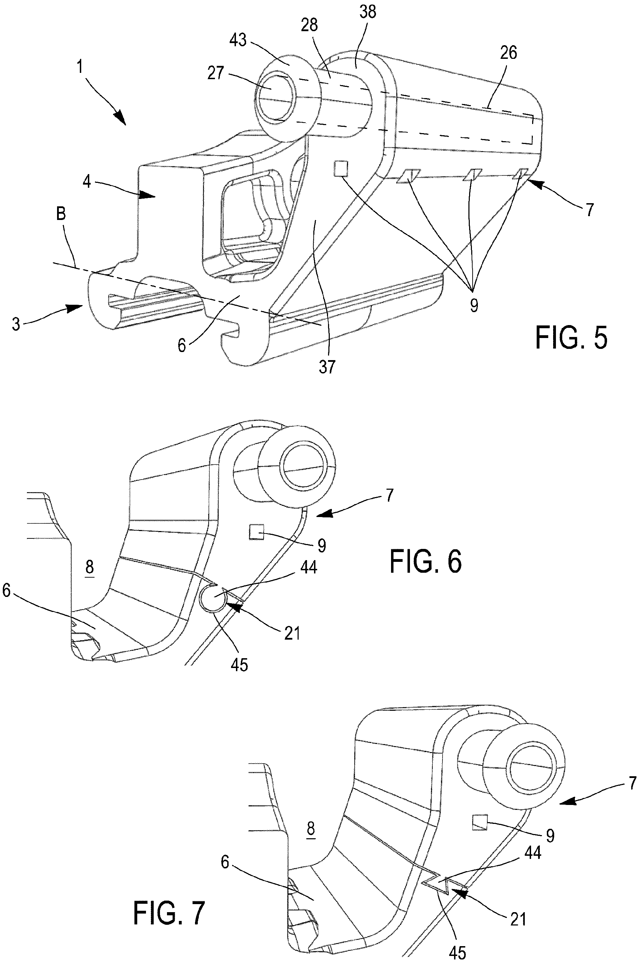

La figure 5 est une vue montrant le dispositif de connexion 1 selon une disposition sensiblement identique à celle de la figure 4. L'une des faces latérales référencée 13 et délimitant le composant 7 est visible sur cette figure. Un seul orifice 9 de projection est ménagé au travers de la face latérale 13.

Selon un mode de réalisation, le composant 7 de projection de liquide comprend au moins un conduit 26. Ce dernier canalise le liquide depuis une entrée 27 jusqu'à l'orifice 9 de projection. En cas de pluralité d'orifices 9 de projection, ce même conduit alimente les orifices de projection. Un tel conduit 26 est avantageusement rectiligne dans la deuxième portion 38 du composant 7 de projection.

Le composant 7 de projection peut également comporter une canule d'alimentation 28 qui s'étend à partir d'une des parois latérales 13 délimitant le composant 7. Cette canule 28 s'étend de manière rectiligne et de manière coaxiale avec le conduit 26. Une telle canule 28 comprend une collerette 43 formant moyen de retenu lorsque un tube d'alimentation en liquide en provenance du véhicule est enfilé sur la canule 28.

La figure 5 montre également un trait d'axe B qui illustre schématiquement la ligne de démarcation entre le moyen de solidarisation 3 et le moyen de liaison 4.

Dans la réalisation présentée ci-dessus, le composant 7 et la plateforme 6 sont monobloc et inséparable, sauf à détruire l'une ou l'autre de ces parties.

Les figures 6 et 7 montrent une variante de réalisation où le composant 7, avantageusement équipé de son orifice 9 de projection, est rapporté sur la plateforme 6. En cas de remplacement d'un balai d'essuyage usagé, cette structure permet de démonter le composant 7 pour le récupérer et ainsi l'installer sur le balai d'essuyage neuf. Le coût du balai de remplacement peut ainsi être maintenu aussi bas que possible.

C'est ainsi que le composant 7 et la plateforme 6 comprennent des moyens de fixation 21 agencés pour assembler le composant 7 sur la plateforme 6. Ces moyens de fixation 21 sont ménagés à la fois sur le composant 7 et sur la plateforme 6. De manière avantageuse, les moyens de fixation 21 sont des formes 44 et 45 opérées sur le composant 7 et sur la plateforme 6, ces formes étant complémentaires l'une envers l'autres.

A titre d'exemple de ces formes, le composant 7 comprend un tenon de section circulaire alors que la plateforme 6 comprend une rainure de section également circulaire. Bien entendu, l'invention couvre la situation inverse où le tenon est ménagé sur la plateforme 6 alors que la rainure est opérée dans une face délimitant le composant 7.

Alternativement et comme visible sur la figure 7, le tenon et la rainure présentent une section en forme de trapèze.

Dans les deux cas, les moyens de fixation 21 sont dit à coulissement, en ce sens qu'ils sont agencés pour autoriser un coulissement du composant 7 par rapport à la plateforme 6.

De manière alternative, les moyens de fixation 21 sont dit à clippage, en ce sens qu'ils sont agencés pour autoriser une rotation d'une pièce par rapport à l'autre en vue de les immobiliser l'une par rapport à l'autre.

Dans la description ci-dessus, le composant et la plateforme sont formés sur un unique côté du moyen de solidarisation. Alternativement, l'invention s'étend à un dispositif de connexion qui comprend deux composants et deux plateformes formés de chaque côté du moyen de solidarisation. Une telle solution permet de réaliser un arrosage du pare-brise pendant une phase ascendante ainsi que pendant une phase descendante du balai d'essuyage.

## Revendications

1. Dispositif de connexion (1) apte à relier un balai d'essuyage (2) d'une vitre d'un véhicule à un bras d'essuyage, comprenant un moyen de solidarisation (3) au balai d'essuyage (2) surmonté d'un moyen de liaison (4) à un adaptateur (5) relié au bras d'essuyage, comprenant une plateforme (6) issue du moyen de solidarisation (3) et un composant (7) qui prend naissance sur la plateforme (6), le dispositif étant **caractérisé en ce que** le moyen de solidarisation (3), le moyen de liaison (4) et la plateforme (6) sont monobloc et dans lequel le composant (7), la plateforme (6) et le moyen de liaison (4) délimitent au moins partiellement un logement (8) apte à recevoir au moins une partie de l'adaptateur (5).

2. Dispositif selon la revendication 1, dans lequel au moins un orifice (9) de projection d'un liquide est formé au travers d'une paroi (12, 14) du composant (7).

3. Dispositif selon la revendication 2, dans lequel au moins un conduit (26) est formé dans le composant (7) pour transporter le liquide depuis une entrée de liquide (27) vers ledit orifice (9) de projection.

4. Dispositif selon les revendications 2 ou 3, dans lequel le moyen de liaison (4) comprend un moyen de pivotement (10) apte à mettre en rotation autour d'un axe (A) le moyen de liaison (4) par rapport à l'adaptateur (5), et dans lequel l'orifice (9) de projection est ménagé au niveau l'axe (A) ou au-delà de celui-ci, en s'éloignant de la plateforme (6).

5. Dispositif selon l'une quelconque des revendications 2 à 4, dans lequel le composant (7) est délimité par une paroi intérieure (11) tournée vers le logement (8), une paroi extérieure (12), au moins deux parois latérales (13, 14) joignant la paroi intérieure (11) à la paroi extérieure (12) et une paroi distale (15) opposée à la plateforme (6), l'orifice de projection (9) étant ménagé exclusivement dans la paroi extérieure (12) et/ou dans la ou les parois latérales (13, 14).

6. Dispositif selon la revendication 5, dans lequel une canule d'alimentation (28) est formée sur l'une des parois latérales (13, 14) délimitant le composant (7).

7. Dispositif selon l'une quelconque des revendications précédentes, dans lequel le moyen de liaison (4) s'étend selon une direction (D1) perpendiculaire à un plan d'essuyage du balai d'essuyage (2), le composant (7) s'étendant selon une deuxième direction (D2), et dans lequel un angle (a1) formé entre la première direction (D1) et la deuxième direction (D2) est compris entre 15° et 55°.

8. Dispositif selon l'une quelconque des revendications précédentes, dans lequel le composant (7) et la plateforme (6) sont monobloc.

9. Dispositif selon l'une quelconque des revendications 1 à 8, dans lequel le composant (7) et la plateforme (6) comprennent des moyens de fixation (21) agencés pour assembler le composant (7) sur la plateforme (6).

10. Dispositif selon la revendication 9, dans lequel les moyens de fixation sont mis en oeuvre par des formes complémentaires ménagées respectivement sur le composant (7) et sur la plateforme (6).

11. Dispositif selon les revendications 9 ou 10, dans lequel les moyens de fixation (21) sont à coulissement.

12. Dispositif selon les revendications 9 ou 10, dans lequel les moyens de fixation (21) sont à clippage.

13. Balai d'essuyage (2) comprenant une lame (22) apte à être appliquée contre une vitre d'un véhicule, une structure flexible (23) reliée à la lame et un dispositif de connexion (1) selon l'une quelconque des revendications précédentes solidarisé à la structure flexible (23) sensiblement au centre de celle-ci, selon une direction longitudinale de la structure flexible (23).

14. Balai selon la revendication 13, comprenant un adaptateur (5) lié en rotation avec le dispositif de connexion (1) et qui s'étend au moins en partie dans le logement (8).

15. Système d'essuyage d'une vitre d'un véhicule comprenant un balai d'essuyage (2) selon l'une quelconque des revendications 13 ou 14 et un bras d'essuyage (24), dans lequel une partie (25) du bras d'essuyage (24) s'étend dans le logement (8).

## Patentansprüche

1. Verbindungsvorrichtung (1), die geeignet ist, ein Wischerblatt (2) einer Scheibe eines Fahrzeugs mit einem Wischerarm zu verbinden, umfassend ein Befestigungsmittel (3) an dem Wischerblatt (2), über dem sich ein Verbindungsmittel (4) mit einem Adapter (5) befindet, der mit dem Wischerarm verbunden ist, umfassend eine Plattform (6), die aus dem Befestigungsmittel (3) hervorgeht, und eine Komponente (7), die auf der Plattform (6) entsteht, wobei die Vorrichtung **dadurch gekennzeichnet ist, dass** das Befestigungsmittel (3), das Verbindungsmittel (4) und die Plattform (6) aus einem Stück bestehen und wobei die Komponente (7), die Plattform (6) und das Verbindungsmittel (4) mindestens teilweise ein Gehäuse (8) begrenzen, das geeignet ist, mindestens einen Teil des Adapters (5) aufzunehmen.

2. Vorrichtung nach Anspruch 1, wobei mindestens eine Öffnung zum Ausspritzen (9) einer Flüssigkeit durch eine Wand (12, 14) der Komponente (7) gebildet ist.

3. Vorrichtung nach Anspruch 2, wobei mindestens ein Kanal (26) in der Komponente (7) gebildet ist, um die Flüssigkeit von einem Flüssigkeitseinlass (27) zu der Öffnung (9) zum Ausspritzen zu transportieren.

4. Vorrichtung nach den Ansprüchen 2 oder 3, wobei das Verbindungsmittel (4) ein Schwenkmittel (10) aufweist, das geeignet ist, das Verbindungsmittel (4) gegenüber dem Adapter (5) um eine Achse (A) in Drehung zu versetzen, und wobei die Öffnung (9) zum Ausspritzen an der Achse (A) oder darüber hinaus ausgebildet ist, indem sie sich von der Plattform (6) entfernt.

5. Vorrichtung nach einem der Ansprüche 2 bis 4, wobei die Komponente (7) durch eine Innenwand (11), die zum Gehäuse (8) gewendet ist, eine Außenwand (12), mindestens zwei Seitenwände (13, 14), die die Innenwand (11) mit der Außenwand (12) verbinden, und eine distale Wand (15), die der Plattform (6) gegenüberliegt, begrenzt ist, wobei die Öffnung (9) zum Ausspritzen ausschließlich in der Außenwand (12) und/oder in der oder den Seitenwänden (13, 14) ausgebildet ist.

6. Vorrichtung nach Anspruch 5, wobei mindestens eine Zufuhrkanüle (28) in einer der Seitenwände (13, 14), die die Komponente (7) begrenzen, gebildet ist.

7. Vorrichtung nach einem der vorhergehenden Ansprüche, wobei sich das Verbindungsmittel (4) in einer Richtung (D1) erstreckt, die senkrecht zu einer Wischebene des Wischerblatts (2) ist, wobei sich die Komponente (7) in einer zweiten Richtung (D2) erstreckt und wobei ein Winkel (α1), der zwischen der ersten Richtung (D1) und der zweiten Richtung (D2) gebildet ist, zwischen 15° und 55° beträgt.

8. Vorrichtung nach einem der vorhergehenden Ansprüche, wobei die Komponente (7) und die Plattform (6) aus einem Stück bestehen.

9. Vorrichtung nach einem der Ansprüche 1 bis 8, wobei die Komponente (7) und die Plattform (6) Befestigungsmittel (21) aufweisen, die angeordnet sind, um die Komponente (7) auf der Plattform (6) zusammenzufügen.

10. Vorrichtung nach Anspruch 9, wobei die Befestigungsmittel durch komplementäre Formen umgesetzt sind, die jeweils auf der Komponente (7) und auf der Plattform (6) ausgebildet sind.

11. Vorrichtung nach einem der Ansprüche 9 oder 10, wobei die Befestigungsmittel (21) gleitend sind.

12. Vorrichtung nach einem der Ansprüche 9 oder 10, wobei die Befestigungsmittel (21) zum Einrasten sind.

13. Wischerblatt (2), umfassend ein Leiste (22), die geeignet ist, gegen eine Scheibe eines Fahrzeugs angelegt zu werden, eine flexible Struktur (23), die mit der Leiste verbunden ist, und eine Verbindungsvorrichtung (1) nach einem der Ansprüche, die zuvor mit der flexiblen Struktur (23) im Wesentlichen in deren Mitte in einer Längsrichtung der flexiblen Struktur (23) fest verbunden worden ist.

14. Blatt nach Anspruch 13, umfassend einen Adapter (5), der in Drehung mit der Verbindungsvorrichtung (1) verbunden ist und sich mindestens teilweise in dem Gehäuse (8) erstreckt.

15. Wischsystem einer Scheibe eines Fahrzeugs, umfassend ein Wischerblatt (2) nach einem der Ansprüche 13 oder 14 und einen Wischerarm (24), wobei sich ein Teil (25) des Wischerarms (24) in dem Gehäuse (8) erstreckt.

## Claims

1. Connection device (1) suitable for linking a windscreen wiper (2) of a window of a vehicle to a wiper arm, comprising a means (3) for securing to the windscreen wiper (2) topped by a means (4) for linking to an adapter (5) linked to the wiper arm, comprising a platform (6) derived from the securing means (3) and a component (7) which emerges on the platform (6), the device being **characterized in that** the securing means (3), the link means (4) and the platform (6) are of a single piece and in which the component (7), the platform (6) and the link means (4) at least partially delimit a housing (8) suitable for receiving at least a part of the adapter (5).

2. Device according to Claim 1, in which at least one liquid spraying orifice (9) is formed through a wall (12, 14) of the component (7).

3. Device according to Claim 2, in which at least one duct (26) is formed in the component (7) to transport the liquid from a liquid inlet (27) to said spraying orifice (9).

4. Device according to Claim 2 or 3, in which the link means (4) comprises a pivoting means (10) suitable for rotating the link means (4) about an axis (A) relative to the adapter (5), and in which the spraying orifice (9) is formed at the level of the axis (A) or beyond the latter, moving away from the platform (6).

5. Device according to any one of Claims 2 to 4, in which the component (7) is delimited by an inner wall (11) facing towards the housing (8), an outer wall (12), at least two lateral walls (13, 14) joining the inner wall (11) to the outer wall (12) and a distal wall (15) opposite the platform (6), the spraying orifice (9) being formed exclusively in the outer wall (12) and/or in the lateral wall or walls (13, 14).

6. Device according to Claim 5, in which a feed nozzle (28) is formed on one of the lateral walls (13, 14) delimiting the component (7).

7. Device according to any one of the preceding claims, in which the link means (4) extends in a direction (D1) at right angles to a wiping plane of the windscreen wiper (2), the component (7) extending in a second direction (D2), and in which an angle (α1) formed between the first direction (D1) and the second direction (D2) lies between 15° and 55°.

8. Device according to any one of the preceding claims, in which the component (7) and the platform (6) are of a single piece.

9. Device according to any one of Claims 1 to 8, in which the component (7) and the platform (6) comprise fixing means (21) arranged to assemble the component (7) on the platform (6).

10. Device according to Claim 9, in which the fixing means are implemented by complementary forms formed respectively on the component (7) and on the platform (6).

11. Device according to Claim 9 or 10, in which the fixing means (21) are slide-fixing means.

12. Device according to Claim 9 or 10, in which the fixing means (21) are clipping means.

13. Windscreen wiper (2) comprising a blade (22) suitable for being applied against a window of a vehicle, a flexible structure (23) linked to the blade and a connection device (1) according to any one of the preceding claims secured to the flexible structure (23) substantially at the centre thereof, in a longitudinal direction of the flexible structure (23).

14. Wiper according to Claim 13, comprising an adapter (5) linked in rotation with the connection device (1) and which extends at least partly into the housing (8).

15. System for wiping a window of a vehicle comprising a windscreen wiper (2) according to any one of Claims 13 and 14 and a wiper arm (24), in which a part (25) of the wiper arm (24) extends into the housing (8).
